# FASCICULE DE BREVET EUROPEEN

(11) **EP 0 672 638 B1**
(45) Date de publication et mention de la délivrance du brevet: **22.10.2003**
(21) Numéro de dépôt: 95400529.4
(22) Date de dépôt: 13.03.1995
(51) Int. Cl.: C04B 35/80, C04B 35/185, C04B 28/02, C04B 30/02

(54) **Matériau isolant thermique à base de fibres d'alumine et sa fabrication**
Thermisch isolierendes Material auf Basis von Aluminiumoxide-Fiber und seine Herstellung
Thermal insulation material based on alumina fibers and its manufacture

(30) Priorité: 16.03.1994 FR 9403047
(43) Date de publication de la demande: 20.09.1995
(73) Titulaire: AEROSPATIALE MATRA, 75016 Paris (FR); VIAM ALL Russian Institut of Aviation Materials, 107005 Moscou (RU)
(72) Inventeur: Shchetanov, Boris Vladimirovich, 129345 Moscou (RU); Mizyurina, Galina Timotheivna, 105118 Moscou (RU); Gribkov, Vladimir Nikolaevich, 125040 Moscou (RU); Shalin, Radii Evguenievich, 103055 Moscou (RU); Kachanov, Evgueni Borissovich, 105523 Moscou (RU)
(74) Mandataire: Lepeudry-Gautherat, Thérèse

(56) Documents cités:
- EP-A- 0 361 356
- FR-A- 2 337 704
- FR-A- 2 610 923
- GB-A- 2 168 284

## Description

La présente invention concerne l'isolation thermique à haute température, c'est-à-dire à des températures de l'ordre de 1600°C.

Plus précisément, l'invention concerne un matériau isolant thermique à base de fibres d'alumine qui peut être utilisé à une température de service de l'ordre de 1600°C pendant une longue durée. Ce matériau possède des propriétés physico-chimiques et thermo-physiques améliorées, telles que résistance, poids, conductivité thermique, température de service.

Certains matériaux isolants thermiques à base de fibres d'alumine sont bien connus. De tels matériaux ont une composition qui résulte du mélange de fibres d'alumine et de fibres de silice, ou du mélange de trois types de fibres : alumine, aluminoborosilicate et silice. Ces matériaux sont fabriqués dans un mélangeur en V, à partir d'une suspension aqueuse de fibres, avec séchage et cuisson subséquents. Les matériaux de ce type ne peuvent pas être utilisés pendant une longue période de service à une température voisine de 1600°C parce que des fibres de silice ne résistant pas suffisamment à la chaleur sont présentes dans leur composition. De plus, la composition contient de l'oxyde de bore qui y est introduit pour avoir un meilleur frittage et pour empêcher la formation de cristobalite α . La température maximale, pour une durée prolongée de service, est de 1430°C pour ces matériaux.

La demande de brevet EP-A-O 093 656 enseigne un matériau isolant thermique à base de fibres d'alumine, de carbone et d'autres matières réfractaires. Différentes résines organiques sont utilisées pour lier les fibres. Un lingot fibreux moulé est imprégné avec la résine et est soumis à une pyrolyse en atmosphère inerte à une température de 700 à 2700°C. Ce matériau également ne peut pas être utilisé en service à haute température parce que le liant est un produit de la pyrolyse de résines organiques et a, par conséquent, tendance à s'oxyder à l'air, à des températures de 900 à 1100°C. Comme indiqué dans la demande de brevet susmentionnée, le matériau résultant est capable de résister seulement à 1000°C pendant 12 heures et à un choc thermique allant jusqu'à 3000°C. Ce matériau a une masse volumique de 200 kg/m³ (0,2 g/cm³) et une résistance à la flexion de 4 MPa (40 kgf/cm²).

Un matériau isolant thermique résistant et léger est décrit dans la demande de brevet FR-A-2 669 623. Les parties volumineuses de configurations complexes sont réalisées en tissant le squelette à partir de fibres de carbone prétraitées avec un premier liant, puis ce squelette est rigidifié au moyen d'un second liant et soumis à un traitement thermique. La résistance thermique de ce matériau est la même que pour le matériau décrit dans la demande de brevet européen susmentionnée. Etant donné que les liants utilisés dans l'invention décrite sont des précurseurs du carbone, la température de service ne peut excéder 1000°C, pour les mêmes raisons qu'évoquées précédemment.

Des matériaux à base de fibres céramiques et/ou de fibres d'alumine ayant des masses volumiques dans la gamme de 144 à 1100 kg/m³ (0,144 à 1,1 g/cm³) sont bien connus par les brevets US 4 041 199, 4 349 637 et 5 071 798 ; les demandes de brevet DE 27 00374, 33 15880, 34 44397 et 38 05110 ; les brevets GB 1 433 923 et 1 506 152 ; les demandes de brevet GB 2 052 472 et 2 089 782 ; et les demandes de brevet EP 0 010 385 et 0 371 586. Ces matériaux sont proposés pour être utilisés comme isolants à haute température (en général comme revêtements de fours) à des températures de 1400 à 1800°C. En pratique, la composition de chacun des matériaux ci-dessus comprend des fibres ou matières réfractaires (alumine, poudre de silice ou mélange de poudres d'oxydes), du liant réfractaire (alumine et/ou silice colloïdales, ou précurseurs de ces oxydes, ou leurs mélanges et des compositions plus complexes), des épaississants, des stabilisants, des activateurs et d'autres adjuvants de traitement.

Les procédés pour fabriquer des articles (plaques et pièces plus compliquées) diffèrent l'un de l'autre mais comprennent des étapes communes : moulage d'une suspension aqueuse de fibres, introduction d'un liant, séchage subséquent et cuisson du lingot fibreux obtenu. Le liant est introduit soit directement dans la suspension, soit par imprégnation du lingot fibreux cru, ou les deux procédés sont utilisés si le liant est complexe et s'il est souhaitable d'introduire les ingrédients du liant successivement.

Le moulage est effectué par un procédé sous vide, sous pression, par coulée ou par une combinaison de différents procédés, par exemple par coulée avec vibrations simultanées, etc...

Le matériau résultant présente un rapport des fibres au liant (ou aux autres charges) dans une gamme très étendue. Le rapport des fibres supportant les plus hautes températures ["Saffil®" de la Société LOI (Grande-Bretagne) "Fibermax®" de la Société Carborundum resistant materials (E.U.A), Denka Alken® de la Société Denki Kagaku Kogyo K.K. (Japon)] aux fibres céramiques moins thermorésistantes ["Fiberfrax®" de la Société Carborundum resistant materials (E.U.A), "Triton Kaowool®" de la Société Marganit Ceramik fiber (Grande-Bretagne) etc...] se situe également dans une très large gamme. Il est évident que plus la teneur en fibres "hautes températures" dans le matériau est élevée, plus sa thermorésistance est élevée.

Les fibres hautement thermorésistantes "Saffil®", "Fibermax®" et "Denka Alken®" présentent un diamètre moyen de 3 µm, une résistance de 500 à 1000 MPa (50 à 100 kgf/mm²), une température maximale d'utilisation de 1500 à 1700°C, c'est-à-dire une température de classe 1500 à 1700°C, et la composition suivante (% en poids) :
"Saffil®" : 96 Al₂O₃, 4 SiO₂ ;
"Denka Alken®" : 80 Al₂O₃, 20 SiO₂ ;
"Fibermax®" : 72 Al₂O₃, 28 SiO₂ (composition de la mullite).

Dans le brevet US 5 071 798 et dans la demande de brevet DE-OS-38 05110, est décrit un matériau présentant une température de service de 1600 à 1800°C. Ce matériau est formé par mise en suspension aqueuse d'un mélange comprenant des fibres de Al₂O₃ hautement thermorésistantes, présentant un diamètre moyen de 3 µm et des fibres d'aluminoborosilicate, de la poudre de Al₂O₃ et/ou de SiO₂, un liant constitué d'Al₂O₃ et/ou de SiO₂ colloïdales et du sulfate d'aluminium. Les proportions des composants sont choisies de telle sorte qu'après la cuisson qui est effectuée à une température de 1400 à 1600°C, la composition consiste seulement en de la mullite (plus de 12% en poids) et du corindon. Pour différentes raisons, par exemple en raison de la mise en suspension aqueuse de la poudre sans aucun épaississant, le procédé qui est enseigné dans les documents susmentionnés ne permet pas d'obtenir un matériau uniforme présentant une masse volumique inférieure à 500 kg/m³ (0,5 g/cm³), ce fait s'expliquant par la précipitation de la poudre sur la surface inférieure de la plaque, sous l'effet de la gravité. De plus, la nécessité d'effectuer l'étape de cuisson à des températures élevées conduit à la croissance de grains et, par conséquent, la résistance de la fibre diminue. Il apparaît que même lorsque le matériau présente une masse volumique plutôt élevée [810 kg/m³ (0,81 g/cm³)], sa résistance maximale à la flexion n'est que de 10,2 MPa (102 kgf/cm²).

On connaît un matériau présentant une résistance à la flexion de 0,3 MPa (3 kgf/cm²), alors que sa masse volumique est de 250 kg/m³ (0,25 g/cm³) (voir le brevet GB 2 089 782). Ce matériau est prévu pour une température de service de 1600°C, et présente un retrait linéaire de 3 % après 3 heures à 1600°C.

On utilise comme épaississant de la carboxyméthylcellulose ou de l'oxyde de polyéthylène qui joue simultanément le rôle de dispersant pour produire une suspension uniforme.

L'amidon cationique est largement utilisé comme épaississant (voir le brevet GB 1 506 152 et les demandes de brevet DE-OS 27 00374 et 34 44397).

Le matériau à base de fibres céramiques présentant une résistance thermique jusqu'à 1260°C (c'est-à-dire des fibres qui sont bien frittées aux faibles températures) présente la résistance maximale, et donc la résistance thermique de ces fibres définit également la résistance thermique du matériau.

Lorsqu'on utilise des fibres "hautes températures", il est nécessaire de fournir plus de liant thermorésistant, lequel, à son tour, conduit à un frittage à température plus élevée et cette température de frittage est parfois plus élevée que la température de service du matériau, mais dans un tel cas, la résistance de la fibre diminue à cause de la croissance de grains.

L'augmentation de la masse volumique du matériau représente l'alternative pour obtenir un matériau résistant.

Pour obtenir une composition résistante et légère, les chercheurs utilisent différentes façons pour introduire le liant, et la composition du liant varie dans une large gamme dans le but d'avoir une température de frittage au moins non supérieure à la température de service du matériau.

Comme décrit dans le brevet US 4 041 199, de la silice (SiO₂) colloïdale est introduite dans un mélange aqueux poudre-fibres, en parallèle avec de l'amidon. De plus, de la poudre d'aluminium et du sulfate d'aluminium sont également ajoutés (en une quantité de 1% en poids, sur la base du poids total de tous les composants dans le matériau résultant), dans le but de réduire la masse volumique du produit.

Dans le brevet GB 2 052 472 est décrit un procédé qui comprend l'humectage d'un mat fibreux par une solution aqueuse de phosphate de monoaluminium.

La demande de brevet DE-OS 33 15880 enseigne un procédé selon lequel un gel d'hydroxyde d'aluminium et/ou une solution de sel d'aluminium sont mis dans une suspension aqueuse de fibres, en même temps qu'une solution de phosphate de monoaluminium. L'article fabriqué est obtenu par moulage sous vide avec séchage supplémentaire.

Une composition de liant réfractaire est suggérée dans le brevet US 4 349 637 cité plus haut. Le liant comprend de l'alumine (Al₂O₃) ou d'autres composés complexes contenant de l'aluminium qui se transforment en Al₂O₃ pendant le séchage et la cuisson.

La demande de brevet EP 0 371 586 citée plus haut décrit l'introduction d'un liant organique (alcool polyvinylique, oxyde de polyéthylène, etc..) dans un liant non organique (Al₂O₃, SiO₂, ZrO₂ colloïdales, et leurs mélanges).

Par le brevet GB 1 433 923 cité plus haut, on connaît un liant comprenant un sol constitué de particules colloïdales présentant une âme dense en silice et un revêtement en alumine amorphe colloïdale.

Bien que les procédés commentés ci-dessus soient avantageux, les matériaux légers [ayant une masse volumique de 100 à 500 kg/m³ (0,1 à 0,5 g/cm³)] à base de fibres "hautes températures", lesquels matériaux sont acceptables pour une longue durée de service à 1600°C, présentent une faible résistance.

Ainsi, la résistance maximale à la flexion du matériau ayant une masse volumique de 250 kg/m³ (0,25 g/cm³) est de 0,3 MPa (3 kgf/cm²) (voir la demande de brevet GB 2 089 782) et la résistance maximale à la flexion du matériau ayant une masse volumique de 520 kg/m³ (0,52 g/cm³) est de 4,2 MPa (42 kgf/cm²) (voir la demande de brevet DE-OS 34 44397).

Le but principal de la présente invention est d'obtenir un matériau isolant thermique fibreux, résistant et léger, ayant une température de service de l'ordre de 1600°C.

Un autre but de la présente invention est d'obtenir un matériau isolant thermique léger pouvant servir à des températures élevées, lequel matériau présente en même temps une faible conductivité thermique.

Ces buts sont atteints selon l'invention qui propose un matériau isolant thermique présentant les propriétés recherchées et un procédé pour sa fabrication.

Plus précisément, selon l'un de ses aspects, l'invention a pour objet un matériau isolant thermique sous forme de corps poreux anisotrope en fibres à base d'alumine et liant de type aluminosilicate, lequel matériau :
a) contient de 70 à 90 % en poids de fibres à base d'alumine et de 10 à 30 % en poids de liant de type aluminosilicate, lesdites fibres étant composées de 72 à 97 % en poids d'Al₂O₃ et de 3 à 28 % en poids de SiO₂ et ayant un diamètre moyen inférieur ou égal à 2 µm, un rapport d'élancement (l/d) moyen de 30 à 130, de préférence de 40 à 90, une résistance d'au moins 600 MPa et une température de classe de 1650°C ;
b) présente une masse volumique dans la gamme de 150 à 500 kg/m³ (0,15 à 0,5 g/cm³) ;
c) présente un retrait linéaire, après 24 heures à 1600°C, non supérieur à 2 % dans sa direction "forte" et non supérieur à 4 % dans sa direction "faible", c'est-à-dire perpendiculairement au plan de moulage ;
d) présente dans sa direction "faible", une résistance à la traction d'au moins 0,15 MPa et une résistance à la compression d'au moins 0,2 MPa ; et
e) présente une anisotropie de 1,3 à 4 ;

De préférence, les fibres à base d'alumine présentent un diamètre dans la gamme de 0,1 à 5 µm, avec une prédominance de 1 à 3 µm, et une longueur dans la gamme de 5 à 600 µm, avec une prédominance de 20 à 300 µm.

Selon un mode de réalisation avantageux, le matériau mis au point selon l'invention présente la composition suivante : 65 à 97 % en poids de Al₂O₃ et 3 à 35 % en poids de SiO₂, de préférence 75 à 85 % en poids

De préférence, le matériau selon l'invention présente une structure cristalline ayant une grosseur des grains de 0,01 à 0,5 µm, avec une prédominance de 0,1 à 0,3 µm.

Selon un mode avantageux de réalisation, lorsque le matériau présente une masse volumique de 250 ± 30 kg/m³ (0,25 ± 0,03 g/cm³), sa conductivité thermique est inférieure à 0,35 W/m.K dans sa direction "faible", à 1600°C sous une pression de 0,1 MPa (1 atm).

Selon un autre de ses aspects, l'invention a pour objet un procédé de fabrication du matériau isolant thermique, défini ci-dessus, à partir de fibres à base d'alumine et de liant de type aluminosilicate, comprenant les étapes suivantes :
a) broyage de fibres à base d'alumine ayant la composition requise et un diamètre moyen inférieur ou égal à 2 µm, dans l'eau jusqu'à l'obtention d'un rapport d'élancement (l/d) moyen de 30 à 130, de préférence de 40 à 90 ;
b) moulage sous vide d'un lingot à partir de la suspension coulante fibreuse aqueuse résultante et extraction subséquente du moule ;
c) fixation dudit lingot dans un cadre en le comprimant légèrement ;
d) séchage, dans le cadre, dudit lingot légèrement comprimé ;
e) préparation d'un liant de type aluminosilicate présentant une faible stabilité ;
f) imprégnation du lingot séché, fixé dans le cadre, au moyen du liant ;
g) gélification du liant ;
h) enlèvement du produit semi-fini ainsi formé du cadre ;
i) séchage du produit semi-fini ;
j) cuisson du produit semi-fini.

De préférence, l'étape a) comprend deux phases :
a') prébroyage des fibres humidifiées à l'eau qui sont déjà introduites dans le moule, par pressage mécanique à l'aide d'un poinçon, jusqu'à ce que le rapport d'élancement (l/d) soit supérieur de 10 à 20 % à la valeur requise ;
a") broyage des fibres dans l'eau, dans un disperseur pourvu d'un agitateur à hélice à axe décalé, ledit broyage étant réalisé jusqu'à l'obtention du rapport d'élancement (l/d) requis.

L'étape e) de préparation du liant est avantageusement réalisée immédiatement avant l'imprégnation.

Le liant peut être essentiellement constitué d'un mélange aqueux de SiO₂ colloïdale ayant un pH d'au moins 8 et d'un ou plusieurs sels non organiques et/ou organiques d'aluminium, de préférence le nitrate d'aluminium.

Le rapport en poids des composants dans le liant, exprimé en oxydes, à savoir SiO₂:Al₂O₃, est dans la gamme de 0,4 à 1,4, de préférence de 0,8 à 1,2.

L'étape f) d'imprégnation du lingot séché par le liant est effectuée avantageusement en plaçant le lingot fixé dans un cadre défini par deux plaques perforées, dans un bain contenant le liant.

L'étape g) de gélification du liant est avantageusement effectuée à la température ambiante en maintenant le lingot imprégné à l'air jusqu'à l'obtention de l'état solide.

L'étape i) de séchage du produit semi-fini est avantageusement effectuée à l'air, à une température non supérieure à 100°C, de préférence à une température de 85 à 95°C, jusqu'à l'obtention d'un poids constant.

L'étape j) de cuisson du produit semi-fini est avantageusement effectuée à l'air, à une température de 1300 à 1600°C, pendant 1 à 10 heures, de préférence pendant 2 à 5 heures.

Le matériau selon l'invention, essentiellement constitué de fibres à base d'alumine, est tout à la fois léger, résistant mécaniquement, résistant aux chocs thermiques, et a une température de service de 1600°C sur une longue période.

Pour préparer un tel matériau, on utilise des fibres à base d'alumine ayant un diamètre moyen inférieur ou égal à 2 µm. On effectue ce choix pour les raisons suivantes :
- avec un diamètre moyen inférieur, la quantité de contacts entre les fibres dans le matériau augmente, et par conséquent la résistance mécanique de celui-ci augmente (alors que toutes les autres caractéristiques sont les mêmes) ;
- un matériau réalisé à partir de fibres plus minces présente une conductivité thermique inférieure, comparé à un matériau réalisé à partir de fibres plus épaisses.

Par conséquent, selon un mode avantageux de réalisation, le matériau isolant thermique selon la présente invention est fabriqué comme décrit ci-après. Des fibres à base d'alumine présentant les propriétés susmentionnées sont broyées jusqu'à l'obtention du rapport d'élancement (l/d) requis. Le broyage est effectué en deux phases parce que les fibres sont relativement solides ou résistantes et qu'il est donc difficile de les casser. Par conséquent, si le broyage n'était effectué que dans un disperseur, le processus prendrait beaucoup de temps et aurait une faible productivité. Le processus est considérablement accéléré lorque le broyage est effectué dans un moule à l'aide, par exemple, d'une presse hydraulique mais dans ce cas, il est difficile de maîtriser le rapport d'élancement (l/d). Par conséquent, l'étape finale de broyage des fibres [jusqu'à l'obtention du rapport d'élancement (l/d) souhaité] est effectuée dans de l'eau distillée, dans un disperseur pourvu d'un agitateur à hélice à axe décalé, ledit agitateur ayant une vitesse de rotation de 2000 à 3000 tr.min⁻¹. Le broyage est effectué à une concentration en fibres de 1 à 5 %. en volume. La valeur spécifique de la concentration est choisie selon la masse volumique souhaitée pour le matériau. Lorsqu'une suspension coulante uniforme est obtenue, le broyage est terminé. Ensuite, la suspension est versée dans un moule ayant des dimensions de 200x200x110 mm. Au fond du moule, sont disposés une plaque métallique perforée et un mince réseau de mailles ou filet ayant une dimension de maille ou cellulaire inférieure ou égale à 0,8 mm. L'excès d'eau est extrait par drainage, par le bas, sous l'action du vide (le récipient collecteur étant évacué sous un vide de 0,02 à 0,06 MPa) pendant 2 à 5 minutes. Le lingot fibreux obtenu est extrait du moule, fixé dans un cadre et pressé perpendiculairement à ses grandes surfaces planes, à l'aide de plaques perforées. L'écart entre les plaques est réglé mécaniquement ; cet écart définit la hauteur requise du lingot. Le lingot étant en position fixe, est séché à l'air à une température de 90 à 250°C, de préférence de 120 à 170°C, jusqu'à l'élimination totale de l'eau. Le contrôle est effectué en pesant le lingot et le séchage est terminé lorsqu'on obtient un poids constant. Le séchage du lingot jusqu'à l'élimination complète de l'eau est nécessaire pour avoir un contact subséquent intime du liant avec les fibres, et pour régler la quantité de liant ajoutée.

Le lingot séché est imprégné avec le liant qui est préparé immédiatement avant l'étape d'imprégnation.

Pour préparer le liant, on utilise des réactifs du commerce, c'est-à-dire Al(NO₃)₃·9H₂O (ce sel peut être produit selon la norme russe GOST 3557-75) et une solution de silice colloïdale (sol de silice), ayant un pH d'au moins 8 et une concentration en SiO₂ de 20 à 25 % en poids (norme russe TU 6-09-4989-83).

On amène la quantité totale d'oxydes introduits ensemble par le liant dans le lingot à une valeur de 10 à 30 % en poids.

Comme source d'alumine, il est possible d'utiliser d'autres sels non organiques et/ou organiques (chlorure d'aluminium, acétate d'aluminium, etc). On prépare d'abord une solution de sel(s) dans laquelle l'eau distillée constitue un solvant, puis la silice colloïdale est introduite dans cette solution de sel(s).

La quantité d'alumine et la concentration d'aluminium dans le sel, ainsi que la quantité de SiO₂ et sa concentration dans la solution colloïdale sont choisies de telle sorte que la quantité totale d'oxydes introduite par le liant dans le lingot soit amenée à une valeur de 10 à 30% en poids, par rapport au poids final du produit et que le rapport en poids SiO₂:Al₂O₃ soit de 0,4 à 1,4, de préférence de 0,8 à 1,2. De telles proportions assurent la gélification du liant, sans addition d'un ou plusieurs composants de type épaississant, tels que par exemple de l'amidon.

La quantité de liant préparée est avantageusement égale au volume du lingot fibreux.

Lorsque le liant est introduit immédiatement dans la suspension, une partie de ce liant est perdue dans l'étape d'élimination de l'eau pendant le moulage du lingot. Par ailleurs, lorsque le liant est introduit par imprégnation dans le lingot cru, une quantité importante de liant ne pénètre pas dans le lingot en raison de la présence d'eau résiduelle dans celui-ci.

Avec le procédé selon l'invention qui permet de fournir la quantité spécifique de liant nécessaire, cet inconvénient est surmonté. Le liant est totalement introduit dans le lingot séché, selon les étapes suivantes : le liant est versé dans le récipient de bain puis le lingot qui est fixé entre deux plaques perforées constituées d'acier inoxydable, est placé dans le bain et, sous l'effet des forces capillaires, le liant est complètement aspiré dans le lingot.

Après absorption complète du liant, le lingot est retiré du bain et est maintenu à l'air, à la température ambiante, pendant 10 à 40 heures jusqu'à la fin de l'étape de gélification, laquelle gélification est vérifiée au moyen de la solidification du lingot. Ensuite, le produit semi-fini ainsi préparé est enlevé du cadre et est séché à une température de 85 à 95°C pendant 20 à 60 heures, jusqu'à obtention d'un poids constant. Un tel programme de séchage aide à empêcher la migration du liant vers la surface du lingot, assurant ainsi une distribution uniforme du liant à travers tout le volume du matériau.

La cuisson du produit semi-fini est effectuée à l'air, à une température de 1300 à 1600°C, pendant 1 à 10 heures, de préférence pendant 2 à 5 heures.

Après un usinage minimum, on obtient le matériau fini, lequel matériau a reçu la forme d'un bloc. Ce bloc est pesé et ses dimensions géométriques sont déterminées.

Après détermination de la masse volumique du bloc, celui-ci est découpé en échantillons pour servir à l'étude des propriétés du matériau.

En règle générale, de tels matériaux, c'est-à-dire des matériaux qui conviennent comme isolants thermiques réutilisables, ont comme indice de résistance principal, la résistance à la traction dans la direction "faible", c'est-à-dire perpendiculaire au plan de moulage. La résistance moyenne à la traction dans cette direction pour le matériau présentant une masse volumique d'environ 250 kg/m³ (0,25 g/cm³) est de 0,4 à 0,6 MPa (4 à 6 kgf/cm²), pour une masse volumique de 350 kg/m³ (0,35 g/cm³), cette résistance moyenne à la traction est de 0,8 à 1,0 MPa (8 à 10 kgf/cm²), et pour une masse volumique de 500 kg/m³ (0,5 g/cm³), elle est de 2,5 à 3,0 MPa (25 à 30 kgf/cm²).

Le retrait linéaire moyen est dans la gamme de 1 à 4% dans la direction "faible" et de 0 à 2 % dans la direction "forte", après 24 heures à 1600°C.

La conductivité thermique du matériau, en particulier dans les domaines des hautes températures et masses volumiques, est égale ou inférieure à celle des matériaux connus du même type.

Le matériau isolant thermique selon l'invention peut être utilisé pour la protection thermique de véhicules spatiaux ou de capsules spatiales, notamment de sondes orbitales de navettes spatiales de rentrée dans l'atmosphère.

Les exemples suivants illustrent mieux les propriétés du matériau selon l'invention et le procédé pour sa fabrication.

### Exemple 1 :

### Production du lingot fibreux :

300 g de fibres à base d'alumine présentant un diamètre moyen de 1,8 µm, une résistance mécanique de 650 MPa (65 kgf/mm²), une température de classe 1650°C (température supportée pendant des temps très courts), une composition de 85 % en poids de Al₂O₃ et 15 % en poids de SiO₂ et qui ont été formées à partir de poudres ayant une granulométrie de 0,02 µm (200Å), sont humectés avec de l'eau distillée et placés dans un moule à fond perforé, lequel moule est mis sur une presse hydraulique et est comprimé à l'aide d'un poinçon.

Lorsque la force appliquée atteint environ 2,5.10⁴ N (2,5 tonnes-force), on la maintient pendant 1 minute, obtenant ainsi un rapport d'élancement (l/d) d'environ 90.

Les fibres ainsi prébroyées sont chargées dans un disperseur rempli de 5 l d'eau distillée, ce qui correspond à une concentration en fibres d'environ 2% en volume. Ensuite, les fibres sont de nouveau broyées au moyen d'un agitateur à hélice présentant un axe décalé, lequel agitateur a une vitesse de rotation de 2800 tr.min⁻¹, jusqu'à la transformation de la masse fibreuse en une suspension coulante uniforme.

Lorsque la concentration est telle qu'indiquée ci-dessus, la suspension devient coulante lorsque le rapport d'élancement (l/d) est d'environ 80, ce qui correspond à une masse volumique du matériau d'environ 200 kg/m³ (0,2 g/cm³). La suspension comprenant des fibres broyées jusqu'à obtention du rapport d'élancement (l/d) souhaité, est versée dans le même moule à plaque perforée, lequel moule est évacué pendant 2 minutes sous un vide de 0,5 atm (environ 5.10⁴ Pa).

Le lingot fibreux est retiré du moule, fixé dans un cadre et pressé perpendiculairement à ses grandes surfaces planes, au moyen de plaques perforées. L'espace entre les plaques, c'est-à-dire la hauteur du lingot, est amené à 40 mm et fixé mécaniquement. Le lingot étant en position fixée, est séché à l'air, à 150°C jusqu'à obtention d'un poids constant.

### Préparation du liant :

230 g de nitrate d'aluminium commercial, Al(NO₃)₃.9H₂O (norme russe GOST 3557-75), avec une teneur en Al₂O₃ de 13,6 % en poids, sont dissous dans 1150 ml d'eau distillée, à la température ambiante. A la solution ainsi obtenue, on ajoute, sous agitation, 220 g de solution de silice colloïdale (norme russe TU 6-09-4989-83) ayant une concentration en SiO₂ de 20 % en poids et un pH de 10. On obtient 1600 g d'un mélange qui occupe un volume de 1490 ml. A ce mélange on ajoute, sous agitation, 110 ml d'eau distillée, et le liant est obtenu en une quantité égale au volume du lingot fibreux (1600 cm³).

Le rapport en poids SiO₂:Al₂O₃ dans le liant est de 1,42 ; la quantité totale d'oxydes est de 75 g (20 % en poids sur la base du poids du matériau).

### Production du produit semi-fini :

Le lingot fibreux séché, fixé dans un cadre, est mis dans un récipient (ayant pour dimensions 215x215x200 mm) avec le liant préparé ci-dessus en une quantité de 1600 ml.

Après absorption complète du liant, le lingot est extrait du récipient de bain et est maintenu à l'air, à la température ambiante, pendant 12 heures jusqu'à la fin de l'étape de gélification, laquelle est vérifiée ou contrôlée grâce à la solidification du liant. Ensuite, le produit semi-fini ainsi préparé est retiré du cadre à plaques perforées et est séché à 90°C pendant 24 heures jusqu'à obtention d'un poids constant.

La cuisson est effectuée à 1400°C pendant 2 heures.

Après un façonnage minimum pour lui donner une forme géométrique régulière, le matériau, sous forme d'une plaque, a des dimensions de 190x190x35 mm et une masse volumique de 220 kg/m³ (0,22 g/cm³). Ensuite, la plaque est découpée en échantillons pour les essais.

Dans le tableau I qui suit sont donnés les résultats de l'essai de conductivité thermique dans la direction "forte", sous atmosphère inerte à 0,1 MPa (latm), selon la méthode du "flux thermique radial".

Les résultats des essais mécaniques et d'autres propriétés du matériau sont donnés dans le tableau III qui suit.

**Tableau I**

| Température (°C) | Conductivité thermique (W/m.K) |
|---|---|
| | Direction "forte" |
| 100 | 0,075 |
| 200 | 0,075 |
| 300 | 0,080 |
| 400 | 0,090 |
| 500 | 0,10 |
| 600 | 0,11 |
| 700 | 0,13 |
| 800 | 0,14 |
| 900 | 0,16 |
| 1000 | 0,18 |
| 1100 | 0,21 |
| 1200 | 0,24 |
| 1300 | 0,26 |
| 1400 | 0,30 |
| 1500 | 0,34 |
| 1600 | 0,38 |
| 1700 | 0,42 |

### Exemple 2 :

### Production du lingot fibreux :

On se procure 560 g de fibres à base d'alumine présentant un diamètre moyen de 1,4 µm, une résistance mécanique de 760 MPa (76 kgf/mm²), une température de classe 1650°C et une composition de 80 % en poids de Al₂O₃ et de 20 % en poids de SiO₂. Ces fibres sont broyées selon le processus de l'exemple 1 jusqu'à obtention d'un rapport d'élancement l/d de 60. Dans cet exemple, la concentration en fibres est de 2,5 % en volume.

Le moulage du lingot est également effectué comme dans l'exemple 1, avec un écart entre les plaques dans le cadre de 600 mm.

### Préparation du liant :

515 g de nitrate d'aluminium sont dissous dans 1535 ml d'eau distillée. On ajoute 350 g de solution de silice colloïdale à la solution ainsi obtenue, en procédant comme dans l'exemple 1. On obtient 2400 g d'un mélange qui occupe un volume de 2180 ml. 220 ml d'eau distillée sont ajoutés au mélange et on obtient un liant présentant un rapport en poids SiO₂:Al₂O₃ de 1, en une quantité égale au volume occupé par le lingot fibreux. La somme des quantités d'oxydes (alumine et silice) dans le liant est de 140 g, ce qui représente 20 % en poids par rapport au poids du matériau.

Les réactifs de départ utilisés ici sont les mêmes que dans l'exemple 1.

### Production du produit semi-fini :

Le lingot fibreux est placé, comme dans l'exemple 1, dans un récipient avec le liant en une quantité de 2400 ml.

Les opérations suivantes sont effectuées comme décrit dans l'exemple 1, si ce n'est que la durée de gélification est de 15 heures dans cet exemple.

La cuisson est effectuée à 1450°C pendant 1,5 heure.

Après façonnage, la plaque obtenue a pour dimensions 190x190x55 mm et une masse volumique de 270 kg/m³ (0,27 g/cm³).

Le matériau est soumis à des essais en ce qui concerne sa résistance mécanique, sa stabilité thermique (voir le tableau III qui suit) et sa conductivité thermique (voir le tableau II qui suit), tant dans la direction "faible" que dans la direction "forte", dans une atmosphère de gaz inerte, sous une pression de 0,1 MPa (1 atm).

**Tableau II**

| Température (°C) | Conductivité thermique (W/m.K) | |
|---|---|---|
| | Direction "forte" | Direction "faible" |
| 20 | 0,090 | 0,090 |
| 100 | 0,092 | 0,092 |
| 200 | 0,095 | 0,095 |
| 300 | 0,10 | 0,098 |
| 400 | 0,11 | 0,10 |
| 500 | 0,12 | 0,11 |
| 600 | 0,13 | 0,12 |
| 700 | 0,14 | 0,13 |
| 800 | 0,15 | 0,14 |
| 900 | 0,17 | 0,15 |
| 1000 | 0,18 | 0,17 |
| 1100 | 0,20 | 0,18 |
| 1200 | 0,22 | 0,20 |
| 1300 | 0,24 | 0,22 |
| 1400 | 0,27 | 0,25 |
| 1500 | 0,30 | 0,27 |
| 1600 | 0,33 | 0,30 |
| 1700 | 0,38 | 0,34 |

### Exemple 3 :

### Production du lingot fibreux :

1170 g de fibres présentant les mêmes propriétés que dans l'exemple 1 sont broyées jusqu'à l'obtention d'un rapport d'élancement l/d de 40. Dans cet exemple, la concentration en fibres est de 5 % en volume. On procède de façon générale comme dans l'exemple 1.

Le moulage du lingot est également effectué comme dans l'exemple 1, l'espace entre les plaques, dans le cadre, étant de 60 mm.

### Préparation du liant :

530 g de nitrate d'aluminium sont dissous dans 1580 ml d'eau distillée. 290 g de solution de silice colloïdale sont ajoutés à la solution ainsi obtenue, en procédant comme dans l'exemple 1. On obtient 2400 g de mélange qui occupe un volume de 2260 ml. 140 g d'eau distillée sont ajoutés à ce mélange et le liant ayant un rapport en poids SiO₂:Al₂O₃ de 0,8 est obtenu en une quantité égale au volume du lingot fibreux, soit 2400 cm³ (200x200x60 mm). Les réactifs utilisés dans cet exemple sont les mêmes que dans l'exemple 1.

### Production du produit semi-fini :

Le lingot fibreux séché, fixé dans un cadre, est mis dans un récipient (ayant pour dimensions 215x215x120 mm) avec le liant en une quantité de 2400 ml. Ensuite, on procède comme dans l'exemple 1.

La cuisson est effectuée à 1450°C pendant 1,5 heure.

Après façonnage, la plaque obtenue a pour dimensions 190x190x55 mm, une masse volumique de 510 kg/m³ (0,51 g/cm³) et une teneur en liant de 10 % en poids.

Les résultats des essais sont donnés dans le tableau III qui suit.

### Exemple 4 :

### Production du lingot fibreux :

490 g de fibres présentant les mêmes propriétés que dans l'exemple 2 sont broyées jusqu'à obtention d'un rapport d'élancement l/d d'environ 90. Dans cet exemple, la concentration en fibres dans la suspension est de 1,5 % en volume.

Le moulage du lingot est effectué selon le processus de l'exemple 1, l'espace entre les plaques, dans le cadre, étant de 80 mm.

### Préparation du liant :

290 g de nitrate d'aluminium sont dissous dans 2830 ml d'eau distillée. 80 g de solution de SiO₂ colloïdale sont ajoutés à la solution ainsi obtenue. On obtient 3200 g de mélange qui occupe un volume de 3080 ml. 120 g d'eau distillée sont ajoutés à ce mélange et on obtient un liant ayant un rapport en poids SiO₂:Al₂O₃ de 0,4, en une quantité égale au volume du lingot fibreux, soit 3200 cm³. Les réactifs utilisés ici sont les mêmes que précédemment.

### Production du produit semi-fini :

La cuisson est effectuée comme dans l'exemple 1. Après façonnage, la plaque obtenue a pour dimensions 190x190x70 mm, une masse volumique de 170 kg/m³ (0,17 g/cm³) et une teneur en liant de 10 % en poids.

Les résultats des essais sont donnés dans le tableau III qui suit.

### Exemple 5 :

### Production du lingot fibreux :

500 g de fibres présentant les mêmes propriétés que dans l'exemple 2 sont broyées juqu'à l'obtention d'un rapport d'élancement l/d de 70. Dans cet exemple, la concentration en fibres dans la suspension est d'environ 2 % en volume.

Le moulage est effectué selon le processus de l'exemple 1, l'espace entre les plaques, dans le cadre, étant de 60 mm.

### Préparation du liant :

715 g de nitrate d'aluminium sont dissous dans 1100 ml d'eau distillée. On ajoute 585 g de SiO₂ colloïdale à la solution résultante. On obtient ainsi 2400 g d'un mélange qui occupe un volume de 2260 ml. 140 g d'eau distillée sont ajoutés au mélange et on obtient la quantité souhaitée de liant dans lequel le rapport en poids SiO₂:Al₂O₃ est égal à 1,2. Les réactifs utilisés, ainsi que les étapes de fabrication du produit semi-fini et de cuisson sont comme décrit dans l'exemple 1.

Après façonnage, la plaque obtenue a des dimensions de 190x190x55 mm, une masse volumique de 250 kg/m³ (0,25 g/cm³) et une teneur en liant de 30 % en poids.

Les résultats des essais sont donnés dans le tableau III qui suit.

**Tableau III**

| Propriétés | Exemples | | | | |
|---|---|---|---|---|---|
| | 1 | 2 | 3 | 4 | 5 |
| Masse volumique (g/cm³) | 0,22 | 0,27 | 0,50 | 0,17 | 0,25 |
| Résistance (MPa) | | | | | |
| - résistance à la traction : | | | | | |
| dans la direction "faible" | 0,42 | 0,43 | >2,53 | 0,20 | 0,54 |
| dans la direction "forte" | 0,55 | 0,78 | >3,85* | | |
| - résistance à la compression : | | | | | |
| dans la direction "faible" | 0,85 | 1,0 | >9,0** | 0,31 | 0,93 |
| dans la direction "forte" | 1,06 | 1,42 | >9,0** | - | 1,37 |
| - résistance à la flexion : | | | | | |
| dans la direction "faible" | 1,18 | 1,42 | | | 1,90 |
| Retrait linéaire (%) (après 24 heures à 1600°C) | | | | | |
| dans la direction "faible" | 1,5 | 1,5 | 0,6 | 1,0 | 4,0 |
| dans la direction "forte" | 0,8 | 0,8 | 0,0 | 0,0 | 2,0 |
| Coefficient de dilatation thermique linéaire, (1/K x 10⁻⁶) | ≈6 | ≈6 | ≈6 | ≈6 | ≈6 |

| | | | | | |
|---|---|---|---|---|---|
| * - un endommagement a eu lieu selon le plan de liaison de l'échantillon et du support métallique. | | | | | |
| ** - les données ont été limitées par les paramètres de la cellule de charge. | | | | | |

## Revendications

1. Matériau isolant thermique sous forme de corps poreux anisotrope en fibres à base d'alumine et liant de type aluminosilicate, lequel matériau :
a) contient de 70 à 90% en poids de fibres à base d'alumine et de 10 à 30% en poids de liant de type aluminosilicate, lesdites fibres étant composées de 72 à 97% en poids d'Al₂O₃ et de 3 à 28% en poids de SiO₂ et ayant un diamètre moyen inférieur ou égal à 2µm, un rapport d'élancement (l/d) moyen de 30 à 130, de préférence de 40 à 90, une résistance d'au moins 600 MPa et une température de classe 1650°C ;
b) présente une masse volumique dans la gamme de 150 à 500 kg/m³ (0,15 à 0,5 g/cm³) ;
c) présente un retrait linéaire, après 24 heures à 1600°C, non supérieur à 2% dans sa direction "forte", c'est-à-dire parallèlement au plan de moulage, et non supérieur à 4% dans sa direction "faible", c'est-à-dire perpendiculairement au plan de moulage;
d) présente, dans sa direction "faible", une résistance à la traction d'au moins 0,15 MPa et une résistance à la compression d'au moins 0,2 MPa ; et
e) présente une anisotropie de 1,3 à 4 ;

2. Matériau selon la revendication 1, **caractérisé en ce que** les fibres à base d'alumine présentent un diamètre dans la gamme de 0,1 à 5 µm, avec une prédominance de 1 à 3 µm, et une longueur dans la gamme de 5 à 600 µm, avec une prédominance de 20 à 300 µm.

3. Matériau selon la revendication 1 ou 2, **caractérisé en ce qu'**il présente la composition suivante : 65 à 97% en poids d'Al₂O₃ et 3 à 35% en poids de SiO₂, de préférence 75 à 85% en poids d'Al₂O₃ et 15 à 25% en poids de SiO₂.

4. Matériau selon l'une quelconque des revendications 1 à 3, **caractérisé en ce qu'**il présente une structure cristalline ayant une grosseur des grains de 0,01 à 0,5 µm, avec une prédominance de 0,1 à 0,3 µm.

5. Matériau selon l'une quelconque des revendications 1 à 4, **caractérisé en ce que** lorsque sa masse volumique est de 250 ± 30 kg/m³ (0,25 ± 0,03 g/cm³), il possède une conductivité thermique inférieure à 0,35 W/m.K dans sa direction "faible", à 1600°C sous une pression de 0,1 MPa (1 atm).

6. Procédé de fabrication du matériau isolant thermique selon l'une quelconque des revendications 1 à 5, à partir de fibres à base d'alumine et de liant de type aluminosilicate, comprenant les étapes suivantes :
a) broyage de fibres à base d'alumine ayant la composition requise et un diamètre moyen inférieur ou égal à 2 µm, dans l'eau jusqu'à l'obtention d'un rapport d'élancement (l/d) moyen de 30 à 130, de préférence de 40 à 90 ;
b) moulage sous vide d'un lingot à partir de la suspension coulante fibreuse aqueuse résultante et extraction subséquente du moule
c) fixation dudit lingot dans un cadre en le comprimant légèrement ;
d) séchage, dans le cadre, dudit lingot légèrement comprimé ;
e) préparation d'un liant de type aluminosilicate présentant une faible stabilité ;
f) imprégnation du lingot séché, fixé dans le cadre, au moyen du liant ;
g) gélification du liant ;
h) enlèvement du produit semi-fini ainsi formé du cadre ;
i) séchage du produit semi-fini ;
j) cuisson du produit semi-fini.

7. Procédé selon la revendication 6, **caractérisé en ce que** l'étape a) comprend deux phases :
a') prébroyage des fibres humidifiées à l'eau qui sont déjà introduites dans le moule, par pressage mécanique à l'aide d'un poinçon, jusqu'à ce que le rapport d'élancement (l/d) soit supérieur de 10 à 20% à la valeur requise ;
a") broyage des fibres dans l'eau, dans un disperseur pourvu d'un agitateur à hélice à axe décalé, ledit broyage étant réalisé jusqu'à l'obtention du rapport d'élancement (l/d) requis.

8. Procédé selon la revendication 6 ou 7, **caractérisé en ce qu'**on réalise l'étape e) de préparation du liant immédiatement avant l'imprégnation.

9. Procédé selon l'une quelconque des revendications 6 à 8, **caractérisé en ce que** le liant est essentiellement constitué d'un mélange aqueux de SiO₂ colloïdale ayant un pH d'au moins 8 et d'un ou plusieurs sels non organiques et/ou organiques d'aluminium, de préférence le nitrate d'aluminium.

10. Procédé selon l'une quelconque des revendications 6 à 9, **caractérisé en ce que** le rapport en poids des composants dans le liant, exprimé en oxydes, à savoir SiO₂:Al₂O₃, est dans la gamme de 0,4 à 1,4, de préférence de 0,8 à 1,2.

11. Procédé selon l'une quelconque des revendications 6 à 10, **caractérisé en ce qu'**on effectue l'étape f) d'imprégnation du lingot séché par le liant, en plaçant le lingot fixé dans un cadre entre deux plaques perforées, à l'intérieur d'un bain contenant le liant.

12. Procédé selon l'une quelconque des revendications 6 à 11, **caractérisé en ce qu'**on réalise l'étape g) de gélification du liant à température ambiante, en maintenant le lingot imprégné à l'air jusqu'à l'obtention de l'état solide.

13. Procédé selon l'une quelconque des revendications 6 à 12, **caractérisé en ce qu'**on effectue l'étape i) de séchage du produit semi-fini à l'air, à une température non supérieure à 100°C, de préférence à une température de 85 à 95°C, jusqu'à l'obtention d'un poids constant.

14. Procédé selon l'une quelconque des revendications 6 à 13, **caractérisé en ce qu'**on effectue l'étape j) de cuisson du produit semi-fini à l'air, à une température de 1300 à 1600°C, pendant 1 à 10 heures, de préférence pendant 2 à 5 heures.

## Patentansprüche

1. Thermisch isolierendes Material in Form anisotroper poröser Körper aus Fasern auf Aluminiumoxid-Basis und Bindemittel des Typs Aluminiumsilicat, wobei dieses Material:
a) 70 bis 90 Gew.% Fasern auf Aluminiumoxid-Basis und 10 bis 30 Gew.% Bindemittel des Typs Aluminiumsilicat enthält, und die genannten Fasern gebildet werden durch 72 bis 97 Gew.% Al₂O₃ und 3 bis 28 Gew.% SiO₂ und einen mittleren Durchmesser niedriger als oder gleich 2 µm, ein mittleres Schlankheitsverhältnis (l/d) von 30 bis 130 und vorzugsweise 40 bis 90 und eine Festigkeit von wenigstens 600 Mpa und eine Temperatur der Klasse 1650°C haben;
b) eine volumenbezogene Masse in dem Bereich von 150 bis 500 kg/m³ (0,15 bis 0,5 g/cm³) hat;
c) eine lineare Schrumpfung nach 24 Stunden bei 1600°C nicht höher als 2% in seiner "starken" Richtung hat, das heißt parallel zu der Formungs- bzw. Gießebene, und nicht höher als 4% in seiner "schwachen" Richtung, das heißt senkrecht zu seiner Formungs- bzw. Gießebene;
d) in seiner "schwachen" Richtung eine Zugfestigkeit von wenigstens 0,15 Mpa und eine Druckfestigkeit von wenigstens 0,2 Mpa hat; und
e) eine Anisotropie von 1,3 bis 4 aufweist.

2. Material nach Anspruch 1, **dadurch gekennzeichnet, dass** die Fasern auf Aluminiumoxidbasis einen Durchmesser in dem Bereich von 0,1 bis 5 µm, überwiegend von 1 bis 3 µm, und eine Länge in dem Bereich von 5 bis 600 µm, überwiegend von 20 bis 300 µm, haben.

3. Material nach Anspruch 1 oder 2, **dadurch gekennzeichnet, dass** es die folgende Zusammensetzung hat:
65 bis 97 Gew.% Al₂O₃ und 3 bis 35 Gew.% SiO₂; vorzugsweise 75 bis 85 Gew.% Al₂O₃ und 15 bis 25 Gew.% SiO₂.

4. Material nach einem der Ansprüche 1 bis 3, **dadurch gekennzeichnet, dass** es eine kristalline Struktur hat, mit einer Korngröße von 0,01 bis 0,5 µm und überwiegend von 0,1 bis 0,3 µm,

5. Material nach einem der Ansprüche 1 bis 4, **dadurch gekennzeichnet, dass**-wenn seine volumenbezogene Masse 250 ± 30 kg/cm³ (0,25 ± 0,03 g/cm³) beträgt, es in seiner "schwachen" Richtung bei 1600°C unter einem Druck von 0,1 MPa (1 at) eine Wärmeleitfähigkeit unter 0,35 W/m.K aufweist.

6. Verfahren zur Herstellung des Wärmeisoliermaterials nach einem der Ansprüche 1 bis 5 aus Fasern auf der Basis von Aluminiumoxid und einem Bindemittel des Typs Aluminiumsilicat, das die folgenden Schritte umfasst:
a) Zerkleinerung von Fasern auf Aluminiumoxidbasis mit der erforderlichen Zusammensetzung und einem mittleren Durchmesser kleiner oder gleich 2 µm in Wasser, bis man ein mittleres Schlankheitsverhältnis (l/d) von 30 bis 130 und vorzugsweise von 40 bis 90 erhält;
b) Gießen - unter Vakuum - eines Blocks aus der resultierenden wässrigen faserhaltigen Gleßsuspension und anschließendes Entfernen der Form;
c) Befestigen des genannten Blocks in einem Rahmen, indem er leicht verdichtet wird;
d) Trocknen des genannten, leicht verdichteten Blocks;
e) Zubereiten eines Bindemittels des Typs Aluminiumsilicat mit einer geringen Stabilität;
f) Imprägnieren des in dem Rahmen befestigten getrockneten Blocks mit dem Bindemittel;
g) Gelieren des Bindemittels;
h) Entnahme des derart gebildeten halbfertigen Produkts aus dem Rahmen;
i) Trocknen des halbfertigen Produkts;
j) Tempern des halbfertigen Produkts.

7. Verfahren nach Anspruch 6, **dadurch gekennzeichnet**, das der Schritt a) zwei Phasen umfasst:
a') Vorzerkleinerung der mit Wasser angefeuchteten Fasern, die sich schon in die Form befinden, durch mechanisches Pressen mit Hilfe eines Stempels, bis das Schlankheitsverhältnis (l/d) 10 bis 20% größer ist als der verlangte Wert;
a") Zerkleinerung der Fasern in Wasser in einer Dispergiervorrichtung, die mit einem Rührwerk mit einer Schraube mit versetzter Achse ausgerüstet ist, wobei die Zerkleinerung solange erfolgt, bis das geforderte Schlankheitsverhältnis (l/d) erreicht worden ist.

8. Verfahren nach Anspruch 6 oder 7, **dadurch gekennzeichnet, dass** man den Schritt zur Zubereitung des Bindemittels unmittelbar vor der Imprägnierung ausführt.

9. Verfahren nach einem der Ansprüche 6 bis 8, **dadurch gekennzeichnet, dass** das Bindemittel im Wesentlichen gebildet wird durch eine wässrige Mischung aus kolloidalem SiO₂ mit einem pH von wenigstens 8 und einem oder mehreren organischen und/oder anorganischen Aluminiumsalzen, vorzugsweise Aluminiumnitrid.

10. Verfahren nach einem der Ansprüche 6 bis 9, **dadurch gekennzeichnet, dass** das Gewichtsverhältnis der Bestandteile des Bindemittels, ausgedrückt in Oxiden, nämlich SiO₂:Al₂O₃, in dem Bereich von 0,4 bis 1,4 und vorzugsweise 0,8 bis 1,2 liegt.

11. Verfahren nach einem der Ansprüche 6 bis 10, **dadurch gekennzeichnet, dass** man den Schritt f) des Imprägnierens des getrockneten Blocks mit dem Bindemittel ausführt, indem man den in einem Rahmen zwischen zwei perforierten Platten befestigten Block in ein das Bindemittel enthaltendes Bad taucht.

12. Verfahren nach einem der Ansprüche 6 bis 11, **dadurch gekennzeichnet, dass** man den Schritt g) des Gelierens des Bindemittels bei Umgebungstemperatur ausführt, indem man den imprägnierten Block der Luft aussetzt, bis der feste Zustand erreicht worden ist.

13. Verfahren nach einem der Ansprüche 6 bis 12, **dadurch gekennzeichnet, dass** man den Schritt i) des Trocknens des halbfertigen Produkts in Luft bei einer Temperatur nicht höher ist als 100°C ausführt, vorzugsweise bei 85 bis 95°C, bis ein konstantes Gewicht erreicht worden ist.

14. Verfahren nach einem der Ansprüche 6 bis 13, **dadurch gekennzeichnet, dass** man den Schritt j) des Tempems des halbfertigen Produkts bei einer Temperatur von 1300 bis 1600°C während 1 bis 10 Stunden und vorzugsweise während 2 bis 5 Stunden ausführt.

## Claims

1. Thermal insulation material in the form of a porous anisotropic body of alumina-based fibres and aluminosilicate-type binder, which material:
a) contains from 70 to 90 % by weight alumina-based fibres and from 10 to 30 % by weight aluminosilicate-type binder, the said fibres being composed of from 72 to 97 % by weight Al₂O₃ and from 3 to 28 % by weight SiO₂ and having an average diameter of less than or equal to 2 µm, an average slenderness ratio (l/d) of from 30 to 130, preferably from 40 to 90, a strength of at least 600 MPa and a 1650°C class temperature;
b) has a density in the range from 150 to 500 kg/m³ (0.15 to 0.5 g/cm³);
c) has a linear shrinkage, after 24 hours at 1600°C, of not greater than 2 % in its "strong" direction, that is to say parallel to the moulding plane, and of not greater than 4 % in its "weak" direction, that is to say perpendicular to the moulding plane;
d) has, in its "weak" direction, a tensile strength of at least 0.15 MPa and a compressive strength of at least 0.2 MPa; and
e) has an anisotropy of from 1.3 to 4.

2. Material according to claim 1, **characterised in that** the alumina-based fibres have a diameter in the range from 0.1 to 5 µm, with a predominance of from 1 to 3 µm, and a length in the range from 5 to 600 µm, with a predominance of from 20 to 300 µm.

3. Material according to claim 1 or 2, **characterised in that** it has the following composition: 65 to 97 % by weight Al₂O₃ and 3 to 35 % by weight SiO₂, preferably 75 to 85 % by weight Al₂O₃ and 15 to 25 % by weight SiO₂.

4. Material according to any one of claims 1 to 3, **characterised in that** it has a crystalline structure having a grain size of from 0.01 to 0.5 µm, with a predominance of from 0.1 to 0.3 µm.

5. Material according to any one of claims 1 to 4, **characterised in that** when its density is 250 ± 30 kg/m³ (0.25 ± 0.03 g/cm³), it has a thermal conductivity of less than 0.35 W/m.K in its "weak" direction, at 1600°C under a pressure of 0.1 MPa (1 atm).

6. Method of producing the thermal insulating material according to any one of claims 1 to 5, starting from alumina-based fibres and aluminosilicate-type binder, comprising the following steps:
a) grinding of alumina-based fibres having the required composition and an average diameter of less than or equal to 2 µm, in water, until an average slenderness ratio (l/d) of from 30 to 130, preferably from 40 to 90, is obtained;
b) moulding *in vacuo* of an ingot starting from the resulting flowable aqueous fibrous suspension and subsequent removal from the mould;
c) fixing of the said ingot in a frame, compressing it slightly;
d) drying, in the frame, of the said slightly compressed ingot;
e) preparation of an aluminosilicate-type binder of low stability;
f) impregnation of the dried ingot, fixed in the frame, using the binder;
g) gelation of the binder;
h) removal from the frame of the semi-finished product thereby formed;
i) drying of the semi-finished product;
j) firing of the semi-finished product.

7. Method according to claim 6, **characterised in that** step a) comprises two phases:
a') pre-grinding of fibres, moistened with water, that have already been introduced into the mould, by mechanical pressing with the aid of a punch, until the slenderness ratio (l/d) is from 10 to 20 % greater than the required value;
a") grinding of the fibres in the water, in a disperser provided with an offset-axis propeller stirrer, the said grinding being carried out until the required slenderness ratio (l/d) is obtained.

8. Method according to claim 6 or 7, **characterised in that** step e) of preparation of the binder is carried out immediately prior to impregnation.

9. Method according to any one of claims 6 to 8, **characterised in that** the binder substantially comprises an aqueous mixture of colloidal SiO₂ having a pH of at least 8 and one or more non-organic and/or organic salts of aluminium, preferably aluminium nitrate.

10. Method according to any one of claims 6 to 9, **characterised in that** the ratio by weight of the constituents in the binder, expressed in terms of oxides, namely SiO₂:Al₂O₃, is in the range from 0.4 to 1.4, preferably from 0.8 to 1.2.

11. Method according to any one of claims 6 to 10, **characterised in that** step f) of impregnation of the dried ingot with the binder is performed by placing the ingot, fixed in a frame, between two perforated plates, in a bath containing the binder.

12. Method according to any one of claims 6 to 11, **characterised in that** step g) of gelation of the binder is carried out at ambient temperature, keeping the impregnated ingot in air until the solid state is obtained.

13. Method according to any one of claims 6 to 12, **characterised in that** step i) of drying of the semi-finished product is performed in air, at a temperature not greater than 100°C, preferably at a temperature from 85 to 95°C, until a constant weight is obtained.

14. Method according to any one of claims 6 to 13, **characterised in that** step j) of firing of the semi-finished product is performed in air, at a temperature from 1300 to 1600°C, for 1 to 10 hours, preferably for 2 to 5 hours.
